# NEW EUROPEAN PATENT SPECIFICATION

(11) **EP 0 191 517 B2**
(45) Date of publication and mention of the opposition decision: **31.07.1996**
(45) Mention of the grant of the patent: 28.11.1990
(21) Application number: 86200099.9
(22) Date of filing: 22.01.1986
(51) Int. Cl.: A01J 7/00, A01K 1/12

(54) **Implement for milking animals, such as cows**
Gerät zum Melken von Tieren, wie z.B Kühen
Dispositif de traite d'animaux, par exemple des vaches

(30) Priority: 28.01.1985 NL 8500224; 28.01.1985 NL 8500222; 28.01.1985 NL 8500223
(43) Date of publication of application: 20.08.1986
(60) Divisional application: 89103331.8
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 091 892
- DE-A- 2 340 421
- GB-A- 2 083 334
- US-A- 3 246 631
- US-A- 3 763 828
- US-A- 4 010 714
- US-A- 4 223 635
- DE TELEGRAAF, 4th December 1984, page T23; E. BOS: "Land en tuinbouw"

## Description

The invention relates to a device for milking animals, such as cows, comprising a milking parlour, means for positioning an animal in the milking parlour, a milking machine with a milking cluster, and control means, the milking cluster being provided with at least one first sensor connected to said control means for measuring whether the milking cluster is attached to the teats of the udder in a correct way for milking. Generally, the milking parlour is a space where the animal can be positioned during milking and where the necessary hygiene must be observed. Milking is effected by means of a milking machine having a milking cluster, whose teat cups can be attached to the teats of the udder. The supplied milk can be conveyed to a storage container.

A device as described in the opening paragraph is known from US patent specification 4,010,714. This publication describes a system wherein the animal is fixed in a standing prearranged position by supporting members. Nevertheless, the position of the legs can be such that it remains difficult to bring the milking cluster in a correct way under the udder and to connect the teat cups to the teats of the animal.

The invention has for its object to provide a device for milking animals, such as cows, in which the positioning of the animal and the connection of the milking cluster, and therewith the milking operation, can be effected in an efficient and reliable manner.

To that end, the device according to the invention includes at least one second sensor for measuring whether the animal is in the appropriate position in the milking parlour to automatically connect the teat cups of the milking cluster to the teats of said animal by detecting whether the hind legs of said animal are in the correct position, said second sensor being connected to said control means in order to prevent the milking operation to be started if the animal is not in the above-mentioned appropriate position.

The presence of a sensor for measuring whether the animal is in the appropriate position makes it possible to correct the posture of the animal in the milking parlour. The presence of a sensor for measuring whether the milking cluster is attached to the teats of the udder in a correct way promotes a further automation of the milking operation. Furthermore, means may be present for switching-on the milking when the milking cluster is correctly attached to the teats. Moreover, means may be present for switching-off the vacuum and repeating the attachment procedure of the milking cluster to the udder when the milking cluster has not been attached correctly to the teats. Therefore, preferably, means may be present for repeating a few times consecutively the attachment of the milking cluster to the udder, as a result of which the chance that a successful attachment is accomplished is very great, whereafter the attachment is of course maintained. Furthermore, means may be present for compelling the animal to leave the milking parlour when attachment of the milking cluster to the udder has not succeeded, optionally after repeated trials. Also, means may be present for recording the result whether attachment of the milking cluster to the udder has been successful or not. This information can then be conveyed to the operating personnel, or be used for other purposes.

The sensor for measuring whether the animal is in the appropriate position in the milking parlour is provided near or in the milking parlour floor and preferably near or under the hind legs of the animal. The sensors for measuring whether the milking cluster is attached to the teats of the udder in a correct way are provided at or near the top of the respective teat cups of the milking cluster.

When a cow is to be milked, the cow can go to the milking parlour of its own accord or can be given a signal by means of the computer through the loudspeaker on the collar which instructs the cow to go to the milking parlour. The entrance door opens when the cow arrives there. The cow moves its head to the manger in which a dose of fodder is provided for the cow. The metered quantity of fodder can be influenced by the identification member provided on the collar of the cow.

The flap in front of the forelegs of the cow is in the upward position, so that the cow cannot advance too far.

The entrance door has closed in the meantime and portions of this door bear on the posterior of the cow, so that the cow is also not capable of moving rearwardly.

In front of the hindlegs a flap moves up around a hinge pin provided near the floor. Should a leg of the cow be standing on the flap, the leg slides to the rear until it is located on the horizontal floor. This flap in front of the hindlegs of the cow prevents ― when the flap is in the vertical position ― a leg of the cow from moving forward. Consequently, the milking cluster cannot be kicked from the cow's udder. The vertical up-movement of the flaps may be effected with the aid of hydraulic cylinders.

In addition, the cow's udder is often located to an excessive extent between the cow's hindlegs, which may cause problems for the milking operation. To prevent this, a portion of the floor on which the cow's hindlegs are positioned, may, optionally hydraulically, be moved to the rear.

When the hydraulically operated flap is moved to an upward position, an opening is created in the floor through which a milking cluster and, optionally, a washing device can move up from below the floor level.

The milking cluster can be arranged such as to permit of lateral movement. Preferably, this capability of movement is coupled to two sensor arms between which the cow is positioned. So when the cow is slightly off-centre of the milking parlour, the milking cluster will be arranged laterally to the same degree, so that an appropriate coupling of the milking cluster to the udder is automatically effected. Preferably, the sensor arms are spring-loaded, so that cows of different thicknesses can be milked by the implement.

Bounding means, for example tubes, are arranged capable of adjustment over the cow, so that the cow cannot move up.

When the hindlegs of the cow have been moved to the rear, the washing device is automatically attached to the udder. After washing of the udder and, optionally, drying, the milking cluster is automatically moved upwards and attached to the udder.

The cow is then milked automatically.

After the milking operation has ended, the milking cluster withdraws to below floor level. The floor closes. The flaps move to a horizontal position. The exit door opens and the cow leaves the milking parlour.

This automatic milking operation can be effected four or more times every 24 hours, which may increase the milk yield. In addition, the milking machine can be in more continuous use, which reduces the operating expenses.

Preferably, the milking cluster of the milking machine comprises one or more sensors, with the aid of which it can be checked whether the teats of the udder are appropriately connected to the milking cluster. Should this not be the case, then the vacuum is automatically removed and the milking operation cannot start. The implement is arranged such that, after an unsuccessful trial to connect the milking cluster to the teats, this attachment operation is automatically repeated a few times. If attachment has then still not been effected, the cow is forced to leave the milking parlour.

In addition, the device preferably includes a milking parlour having a floor in which one or more sensors are provided for checking whether the cow is in the milking parlour in the correct position. It might, for example, be possible that a leg of the cow is trapped. Such measures are taken in the device that, if the cow is not present in the correct position, the milking operation does not start.

Members are preferably provided to move the cow to an appropriate position or location. As described in the foregoing, these members may, for example, be the movable floor and/or the hingeable flap.

For a better understanding of the invention, an embodiment of a device for milking animals will now be described, by way of example, with reference to the drawing.
Figure 1 is a plan view of the device;
Figure 2 is a side elevational view of the device, partly in cross-section;
Figure 3 is a cross-sectional view along the line III―III of Figure 2;
Figure 4 shows a set-up of the device;
Figure 5 shows a number of details of the device, shown in plan view and
Figure 6 shows details by means of a cross-sectional view along the line VI―VI of Figure 5.

The Figures are shown schematically, corresponding components having been given the same reference numerals.

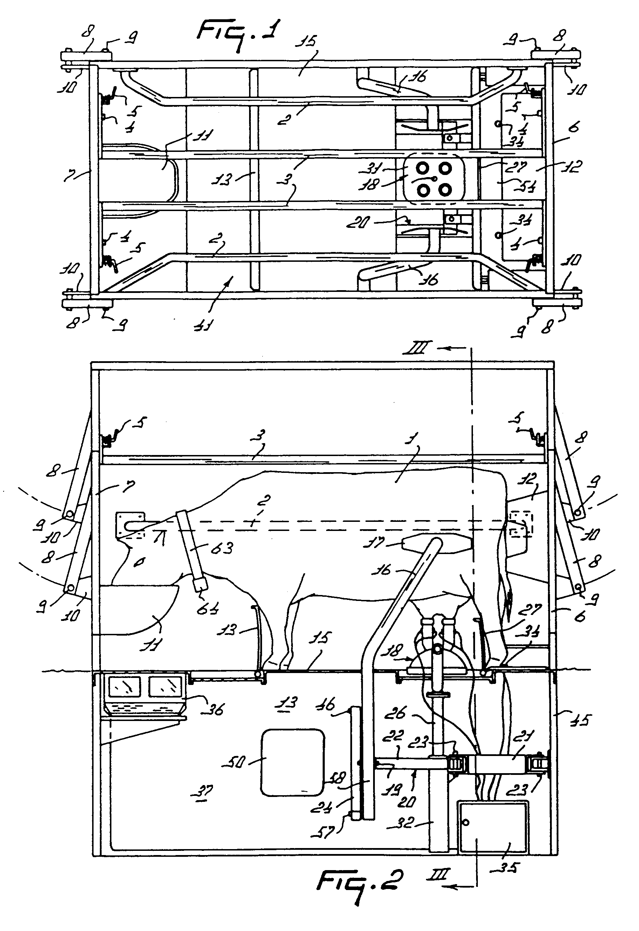

Figures 1, 2 and 3 show a milking parlour in which a cow 1 may be present. The milking parlour is provided on either side with guide rails 2 and with guide rails 3, which may extend over the cow. The lateral guide rails 2 are fastened to the milking parlour wall. The upper guide rails 3 are adjustable for height in that they can swivel around the hinge points 4 and can be locked in different positions by means of blocking devices.

In addition, the milking parlour has an entrance door 6 and an exit door 7. To open the doors, swivel arms 8 are provided which are connected capable of hinging to the frame or the wall of the device through hinge points 9 and also capable of swivelling to supports 10 fastened to the doors 6, 7. The doors 6 and 7 can be operated individually and automatically, for example hydraulically or pneumatically, through control means not further shown in the Figures 1, 2 and 3.

A manger 11 is fastened to the exit door 7, in which doses of fodder, for example concentrated fodder, can be applied through means not further shown.

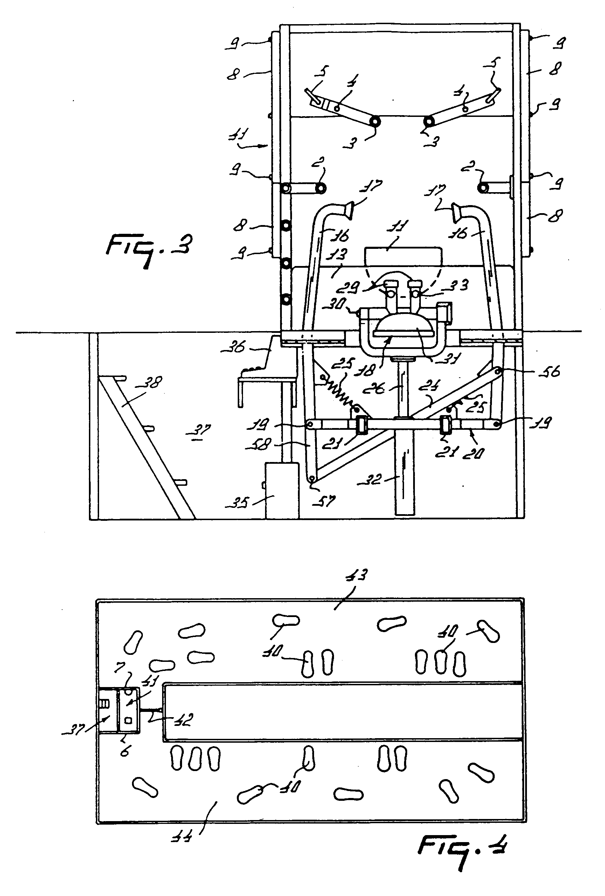

The entrance door 6 has a buffer 12, which ― as is shown in Figure 2 ― can bear against the posterior of the cow. Because of the presence of this buffer, the animal cannot move to the rear or the possibility to move to the rear can be limited. In this way the animal can be positioned in the longitudinal direction.

Figure 2 shows a flap 13, which is swivable around hinge pin 14 and is shown in its raised position. The flap 13 can be swivelled to a substantially horizontal position, the flap 13 then being flush with the floor 15 of the milking parlour. When the animal enters the milking parlour, flap 13 will be in the position shown, and the animal will move its forelegs up to or near the flap 13, so as to be able to reach the manger 11.

Additionally, the device has two sensor members 16, both provided with a shoe 17, which can bear against the animal's side. The mutual distance between the shoes 17 can be varied, but by means of a mechanism still further to be described in the sequel, the milking cluster 18 will always be in a central position below the two shoes 17. To that end, the two sensor members 16 are provided, each capable of hinging around a horizontal shaft 19, to a frame 20, which frame 20 can be moved laterally relative to the milking parlour because of the fact that it is supported by two parallel beams 21, each beam 21 being connected by means of one end and capable of hinging around a vertical shaft 22 to the frame 20 and by means of its other end, capable of hinging around vertical shaft 23 to the frame of the device. Thus a parallelogram structure is obtained. The mutual motion of the sensor members 16 is coupled such that their motion can only proceed symmetrically relative to the frame 20. For that purpose a connecting rod 24 is provided, one end 46 of which is connected capable of hinging to one sensor member, more specifically remote from hinge point 19, and by means of its other end 57 this rod 24 is connected to an extension 58 of the other sensor member at substantially the same distance from hinge point 19. So as to pull the two sensor members 16 slightly towards each other, a tension spring 25 is provided. The support 26 for the milking cluster is also connected to the frame 20, so that it can also be moved laterally by swivelling of the beams 21.

The tension spring 25 moves the shoes 17 of the sensor members 16 to each other in such a way that the mutual distance between the shoes 17 is less than the width of an animal entering the milking parlour. As a result thereof, the shoes will bear on both sides against the animal, the frame 20 always being moved to a position straight under the animal, as a result of which the milking cluster support 26 will always be central under the animal. Even if the animal moves during milking in a lateral direction, the milking cluster will follow this movement.

The device can also include means for moving the sensor members 16 mutually from each other when the animal enters and/or leaves the milking parlour.

The device furthermore includes a flap 27, which is swivable around a horizontal hinge pin 28, which extends substantially in the lateral direction relative to the milking parlour. The flap 27 will be in its horizontal position when it forms part of the floor 15 of the milking parlour, when the animal enters the milking parlour. Thereafter the flap 27 can be swivelled in the vertical direction, thus preventing the hindlegs of the animal, which are then up against or near the flap 27, from being capable of forward movement. When one or both hindlegs of the animal would originally stand on the flap, this leg or both hindlegs will be compelled to move to the rear, which improves the accessibility of the udder. Because of the presence of guide rails 3 above the animal, the animal is prevented from trying to step over the flaps 13 or 27.

In Figure 1 four teat cups 29 of the milking cluster 18 are shown in plan view. As will be clear from the Figures 2 and 3, the teat cups 29 are connected such to the support 26 by means of the horizontal hinge pin 30 that the cups of the milking cluster can rotate through 180°, whereafter they face down, cleaning means, such as a bowl-shaped basin 31 also having been rotated through 180° so that this basin has its open side face upward. The bowl-shaped basin 31 may be used for washing and cleaning the udder.

The milking cluster 18 and the bowl-shaped basin 31 can move with their support 26 in the vertical direction, because the support 26 can move telescopically in the member 32 connected to the frame 20.

Figure 2 furthermore shows a number of sensors, more specifically sensors 33 on the teat cups 29, which sensors can detect whether the connection of the teat cup to the teat of the udder is effected correctly. Sensors 34 can detect whether the hindlegs of the animal are in a correct position.

In addition, a control unit denoted by reference numeral 35 and a microprocessor 36 are arranged below the milking parlour floor level.

As is shown in Figure 3, a control room 37 is also provided below the floor level of the milking parlour and a star 38 is shown which gives access to the control room.

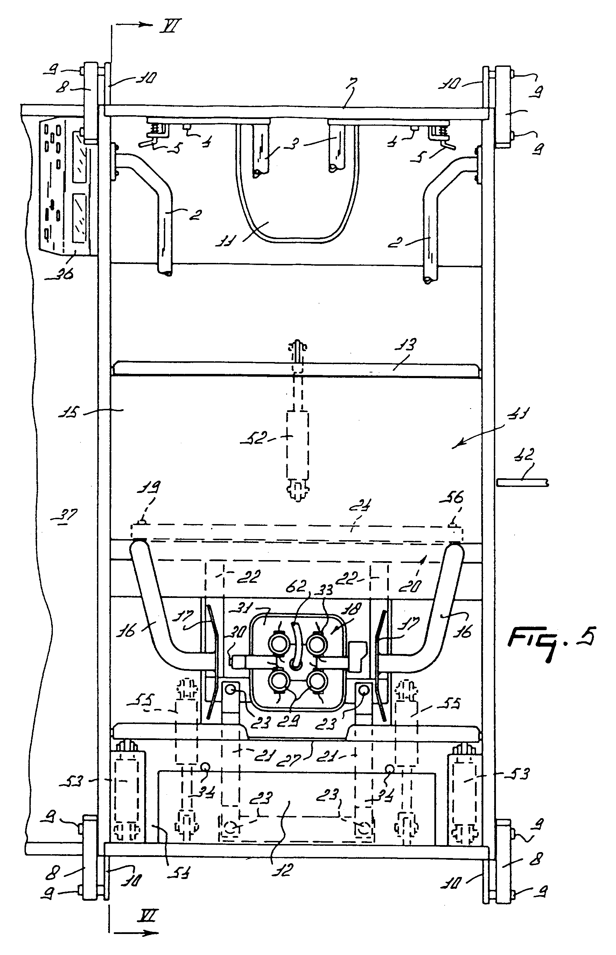

Figure 4 shows schematically a stable in which a number of animals 40 move freely. The milking parlour 41 is incorporated in the stable and furthermore a door 42 is present, so that the stable is divided into two portions43 and 44. Door 42 is freely swivable in one direction, so that the animals 40 can move through this door from portion 44 to portion 43 of the stable, but not vice versa. The animals can only move from portion 43 to portion 44 of the stable through the milking parlour 41, which, for that purpose has an entrance door 6 and an exit door 7.

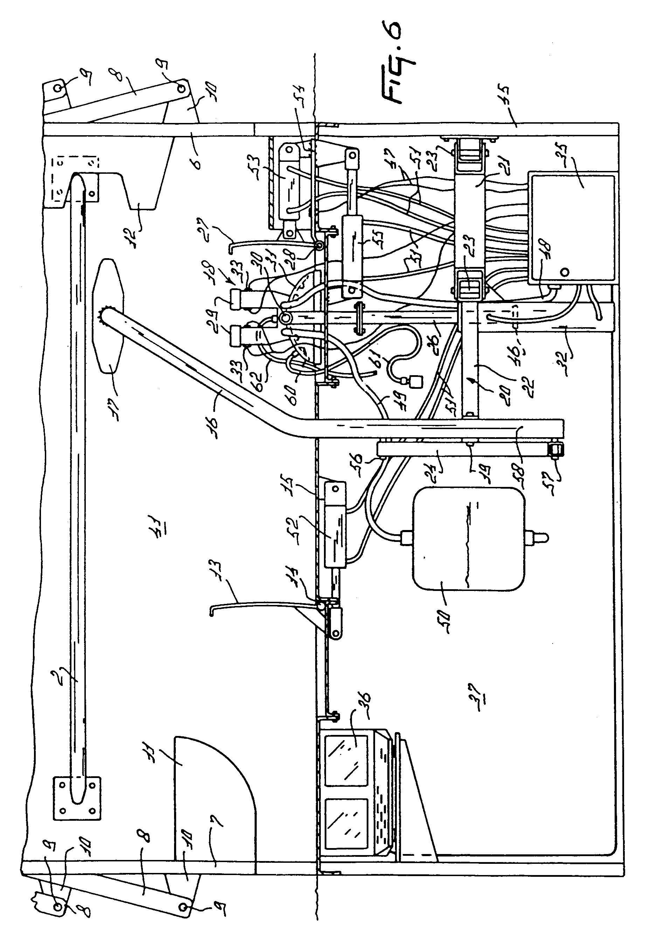

Figures 5 and 6 are cross-sectional views of a portion of the device for milking animals, which cross-sectional views show more details. The device includes guide rails 2 extending on both sides of the animal when the animal is in the milking parlour. In addition, in Figure 5 portions of guide rails 3 are shown, which guide rails may extend over the animal. The device furthermore has an entrance door 6 and an exit door 7, the entrance door 6 having a buffer 12 against which the posterior of the animal can bear. Door 7 is provided with a manger 11.

A frame 20 is connected in such a way to a wall 45 by means of bars 21 that the frame 22 is capable of moving substantially in the lateral direction. To that end, two bars 21 are provided which are mutually in parallel and are each connected by means of one end to the wall 45, capable of hinging around a vertical axis, and by means of their other ends through a vertical hinge pin to the frame 22, so that a parallelogram construction is obtained. The sensor members 16 are fastened to the frame 22 and the support 26 is fastened through member 32. Member 32 constitutes a cylinder in which a piston 46 connected to a support 26 can move with the object of moving the milking cluster 18 in the vertical direction.

Furthermore, the frame 22 supports two sensor members 16, which are both swivable, the connection being intercoupled by means of connecting rod 24. As has already been described in the foregoing, the sensor members 16 move the frame 22 such, that the milking cluster 18 is always in a central position under the two shoes 17 of sensor members 16. The milking cluster 18 which can move, by traveling in the vertical direction, to below the floor level of the milking parlour because a support 26 descends in element 32, has sensors 33 which can detect whether the teat cups 29 have been connected correctly to the teats of the udders. These sensors 33, as are also sensors 34 for detecting the position of the hindlegs of the animal, are connected by means of wires 47 to the control unit 35. By means of conduit 48, this control unit 35 is connected to the milking cluster 18, for producing the vacuum for the milking operation. The milk can flow to storage container 50 through conduit 49.

In addition, control unit 35 provides for the motions of the different portions of the device. To that end, control unit 35 is connected through hydraulic conduits or air conduits 51 to a hydraulic or pneumatic cylinder 52 for operating flap 13 and to a hydraulic or pneumatic cylinder 53 for operating flap 27. Also the height adjustment of support 26 of milking cluster 18 may be effected hydraulically or pneumatically.

Additionally, the device includes a floor portion 54 which is capable of sliding in the longitudinal direction relative to the milking parlour. By means of hinge 28 this floor portion 54 is connected to flap 27 and can be moved by means of a pneumatic or hydraulic cylinder 55. By moving the floor portion 54 rearwardly, the hindlegs of the animal can be moved to the rear, so that the udder is accessible to an improved degree. In this situation, the buffer 12 can bear against the posterior of the animal.

As is shown in Figure 6, the milking cluster 18 can swivel around horizontal shaft 30, so that the bowl-shaped basin 31 is directed upwardly. In this position of basin 31, cleaning of the animal's udder can be effected, for which purpose spray nozzles 60 and a liquid fed-forward through conduit 61 can be sprayed against the udder. This liquid may be a disinfectant, a rinsing agent in the form of warm water or any other liquid suitable for washing, rinsing, disinfecting or otherwise cleaning the udder. The bowl-shaped basin 31 has in its centre a discharge conduit 62 through which the used-up liquid can be discharged and through which optionally warm air can be blown to the udder for drying it.

Figures 5 and 6 show, also schematically, a micro-processor or computer 36 which can control the device. This control may relate to connecting the milking cluster to the udder, decoupling the milking cluster from the udder, rinsing, cleaning or disinfecting the udder, positioning of the animal, metering of fodder, etc. Then, the animal 1 may be provided with a collar 63 to which means 64 for identifying the animal are attached, so that using a sensor it can be detected which animal is present in the milking parlour, this information being used by the micro-processor 36 for controlling the device.

Further sensors may alternatively be provided, for example sensors for determining the temperature of the milk, which data may be important for controlling the device. The relevant data of each animal can be stored in the memory of the micro-processor 36 and are thus available in any combination for a person operating the device.

## Claims

1. A device for milking animals, such as cows, comprising a milking parlour, means for positioning (2, 3, 12, 13, 16, 17, 27) an animal in the milking parlour, a milking machine with a milking cluster (18), and control means (35, 36), the milking cluster (18) being provided with at least one first sensor (33) connected to said control means (35, 36) for measuring whether the milking cluster (18) is attached to the teats of the udder in a correct way for milking, characterized in that the device includes at least one second sensor (34) for measuring whether the animal is in the appropriate position in the milking parlour to automatically connect the teat cups of the milking cluster to the teats of said animal by detecting whether the hind legs of said animal are in the correct position, said second sensor (34) being connected to said control means (35, 36) in order to prevent the milking operation to be started if the animal is not in the above-mentioned appropriate position.

2. A device as claimed in claim 1, characterized in that the control means (35, 36) provide for:
switching-on the milking when the milking cluster (18) is correctly attached to the teats;
switching-off the vacuum and repeating the attachment procedure of the milking cluster (18) to the udder when the milking cluster (18) has not been attached correctly to the teats;
repeating a few times consecutively the attachment of the milking cluster (18) to the udder;
compelling the animal to leave the milking parlour when attachment of the milking cluster (18) to the udder has not succeeded, optionally after repeated trials;
recording the result whether attachment of the milking cluster (18) to the udder has been successful or not.

3. A device as claimed in claim 1 or 2, characterized in that the second sensor (34) for measuring whether the animal is in the appropriate position in the milking parlour is provided near or in the milking parlour floor.

4. A device as claimed in claim 1, 2 or 3, characterized in that the second sensor (34) for measuring whether the animal is in the appropriate position in the milking parlour is provided near or under the hindlegs of the animal.

5. A device as claimed in any one of the preceding claims, characterized in that the first sensors (33) for measuring whether the milking cluster (18) is attached to the teats of the udder in a correct way are provided at or near the top of the respective teat cups (29) of the milking cluster (18).

## Patentansprüche

1. Vorrichtung zum Melken von Tieren, wie z. B. Kühen, mit einem Melkstand, einer Einrichtung (2, 3, 12, 13, 16, 17, 27) zum Positionieren eines Tieres in dem Melkstand, einer Melkmaschine mit einem Melkgeschirr (18) und einer Steuereinrichtung (35, 36), wobei das Melkgeschirr (18) mindestens einen mit der Steuereinrichtung (35, 36) verbundenen ersten Sensor (33) aufweist zum Messen, ob das Melkgeschirr (18) in zum Melken geeigneter Weise an den Zitzen des Euters angebracht ist,
dadurch gekennzeichnet, daß die Vorrichtung mindestens einen zweiten Sensor (34) aufweist zum Messen, ob sich das Tier innerhalb des Melkstandes in der geeigneten Position befindet, um die Melkbecher des Melkgeschirrs automatisch an die Zitzen des Tieres anzuschließen, wofür eine Überprüfung der korrekten Position der Hinterbeine des Tieres vorgesehen ist, und daß der zweite Sensor (34) mit der Steuereinrichtung (35, 36) verbunden ist, um ein Starten des Melkvorgangs zu verhindern, wenn sich das Tier nicht in der geeigneten Position befindet.

2. Vorrichtung nach Anspruch 1,
dadurch gekennzeichnet, daß die Steuereinrichtung (35, 36) vorgesehen ist für:
- Einschalten des Melkvorgangs, wenn das Melkgeschirr (18) an den Zitzen korrekt angebracht ist;
- Abschalten des Vakuums und Wiederholen des Anbringvorgangs des Melkgeschirrs (18) an dem Euter, wenn das Melkgeschirr (18) nicht korrekt an den Zitzen angebracht worden ist;
- Wiederholung der Anbringung des Melkgeschirrs (18) an dem Euter für einige Male in aufeinanderfolgender Weise;
- Zwingen des Tieres zum Verlassen des Melkstands, wenn die Anbringung des Melkgeschirrs (18) an dem Euter nicht gelungen ist, und zwar wahlweise nach wiederholtem Versuchen;
- Aufzeichnung des Ergebnisses, ob die Anbringung des Melkgeschirrs (18) an dem Euter erfolgreich war oder nicht.

3. Vorrichtung nach Anspruch 1 oder 2,
dadurch gekennzeichnet, daß der zweite Sensor (34) zum Messen, ob sich das Tier in der geeigneten Position in dem Melkstand befindet, nahe beim oder im Melkstandboden vorgesehen ist.

4. Vorrichtung nach Anspruch 1, 2 oder 3,
dadurch gekennzeichnet, daß der zweite Sensor (34) zum Messen, ob sich das Tier in der geeigneten Position in dem Melkstand befindet, nahe bei oder unter den Hinterbeinen des Tieres vorgesehen ist.

5. Vorrichtung nach einem der vorausgehenden Ansprüche,
dadurch gekennzeichnet, daß die ersten Sensoren (33) zum Messen, ob das Melkgeschirr (18) in korrekter Weise an den Zitzen des Euters angebracht ist, am oder nahe beim oberen Ende der jeweiligen Melkbecher (29) des Melkgeschirrs (18) vorgesehen sind.

## Revendications

1. Dispositif pour traire des animaux, tels que des vaches, comprenant une stalle de traite, des moyens (2, 3, 12,13, 16, 17, 27) pour positionner un animal dans la stalle de traite, une machine à traire avec un groupe de traite (18), et des moyens de commande (35, 36), le groupe de traite (18) étant muni d'au moins un premier capteur (33) relié auxdits moyens de commande (35, 36) pour mesurer si le groupe de traite (18) est attaché aux trayons du pis de manière correcte pour la traite,
**caractérisé** en ce que le dispositif comporte au moins un deuxième capteur (34) pour mesurer si l'animal est en position appropriée dans la stalle de traite pour relier automatiquement les godets de trayons du groupe de traite aux trayons dudit animal, en détectant si les pattes postérieures dudit animal sont en position correcte, ledit deuxième capteur (34) étant relié auxdits moyens de commande (35, 36) afin d'empêcher la mise en route de l'opération de traite si l'animal n'est pas dans la position appropriée précitée.

2. Dispositif selon la revendication 1, caractérisé en ce que les moyens de commande (35, 36) assurent :
- la mise en route de la traite quand le groupe de traite (18) est correctement attaché aux trayons;
- l'interruption du vide et la répétition de la procédure d'attachement du groupe de traite (18) au pis quand le groupe de traite (18) n'a pas été attaché correctement aux trayons;
- la répétition, en plusieurs fois consécutives, de l'attachement du groupe de traite (18) au pis;
- l'expulsion de l'animal hors de la stalle de traite quand l'attachement du groupe de traite (18) au pis n'a pas réussi, le cas échéant après des essais répétés;
- l'enregistrement du résultat, selon que l'attachement du groupe de traite (18) au pis a réussi ou non.

3. Dispositif selon la revendication 1 ou 2, caractérisé en ce que le deuxième capteur (34) pour mesurer si l'animal est en position appropriée dans la stalle de traite est prévu près du plancher de la stalle de traite ou dans celui-ci.

4. Dispositif selon la revendication 1, 2 ou 3, caractérisé en ce que le deuxième capteur (34) pour mesurer si l'animal est en position appropriée dans la stalle de traite est prévu près des pattes postérieures de l'animal ou sous celles-ci.

5. Dispositif selon l'une quelconque des revendications précédentes, caractérisé en ce que les premiers capteurs (33) pour mesurer si le groupe de traite (18) est attaché aux trayons du pis de manière correcte sont prévus au sommet des godets de trayons (29) respectifs du groupe de traite (18) ou près de ce sommet.
